(19) Europäisches Patentamt / European Patent Office / Office européen des brevets

(11) **EP 3 364 521 A1**

(12) **EUROPEAN PATENT APPLICATION**
published in accordance with Art. 153(4) EPC

(43) Date of publication:
**22.08.2018 Bulletin 2018/34**

(21) Application number: **16855743.7**

(22) Date of filing: **13.10.2016**

(51) Int Cl.:
*H02J 50/80* (2016.01)     *H02J 50/90* (2016.01)
*H02J 50/12* (2016.01)     *H02J 7/02* (2016.01)
*H02M 7/48* (2007.01)

(86) International application number:
**PCT/KR2016/011498**

(87) International publication number:
**WO 2017/065526 (20.04.2017 Gazette 2017/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **16.10.2015 KR 20150144962**

(71) Applicant: **LG Innotek Co., Ltd.**
**Seoul, 04637 (KR)**

(72) Inventor: **PARK, Jay**
**Seoul 04637 (KR)**

(74) Representative: **DREISS Patentanwälte PartG
mbB
Friedrichstraße 6
70174 Stuttgart (DE)**

(54) **WIRELESS POWER TRANSFER SYSTEM AND DRIVING METHOD THEREFOR**

(57)     A method for wirelessly transmitting power from a transmission device to a reception device comprises the steps of: transmitting a signal for detecting the reception device; receiving an identification packet from the reception device; resetting a driving frequency range of the transmission device on the basis of the identification packet of the reception device; and transmitting wireless power generated within the reset driving frequency range.

Fig 9

```
┌─────────────────────┐
│   SELECTION PHASE   │
└─────────────────────┘
           │
           ▼
┌─────────────────────┐
│     PING PHASE      │
└─────────────────────┘
           │
           ▼
┌─────────────────────┐
│  IDENTIFICATION AND │──────────┐
│ CONFIGURATION PHASE │          │
└─────────────────────┘          ▼
                        ┌──────────────────────────┐
                        │   RECEIVE IDENTIFICATION  │
                        │ PACKET (THRESHOLD CURRENT │
                        │    VALUE INFORMATION)     │
                        └──────────────────────────┘
                                   │
                                   ▼
                        ┌──────────────────────────┐
                        │ DRIVING FREQUENCY BOUNDARY│
                        │    CONFIGURATION PHASE    │
┌─────────────────────┐            │
│ POWER TRANSFER PHASE│◄───────────┘
└─────────────────────┘
```

**Description**

[Technical Field]

Embodiments relate to a wireless power transfer system and a method of driving the same.

[Background Art]

In general, various types of electronic apparatuses include respective batteries and are driven using power stored in the batteries. In an electronic apparatus, a battery may be replaced or recharged. To this end, the electronic device includes a contact terminal for contact with an external charging device. That is, the electronic apparatus is electrically connected to a charging device through a contact terminal. However, the contract terminal of the electronic apparatus is externally exposed and thus may be contaminated by foreign materials or short-circuited by moisture. In this case, contact failure occurs between the contact terminal and the charging device and thus the battery of the electronic apparatus is not charged.

In order to solve the above-described problem, wireless power transfer (WPT) for wirelessly charging the electronic apparatus is proposed.

A WPT system transfers power over the air without a wire, thereby maximizing convenience of supply of power to a mobile apparatuses and digital appliances.

A WPT system has advantages such as energy conservation through real-time power use control, overcoming of power supply space restriction, and reduction in number of used batteries through battery recharging.

Representative examples of a method of implementing a WPT system include a magnetic induction method and a magnetic resonance method. The magnetic induction method uses a non-contact energy transmission technology for providing two coils close to each other and generating electromotive force in the other coil by magnetic flux generated when current flows in one coil, and may use a frequency of several hundred kHz. The magnetic resonance method uses a magnetic resonance technology of using only an electric field or a magnetic field without an electromagnetic wave or current, has a power transfer distance of more than several of meters, and may use a band of several MHz.

A WPT system includes a transfer device for wirelessly transferring power and a reception device for receiving power and charging a load such as a battery. At this time, a transfer device capable of selecting the charging method of the reception device, that is, any one of the magnetic induction method and the magnetic resonance method, and wirelessly transferring power in correspondence with the charging method of the reception device has been developed.

Meanwhile, as the reception device placed in the charging region of the transfer device is intentionally shaken or is frequently shaken as in a vehicle, a coupling coefficient is rapidly changed due to misalignment between the transfer and reception devices and thus power transferred from the transfer device is rapidly changed, thereby damaging the reception device.

If excessive transmit power is transferred due to rapid change in transmit power, overvoltage may be applied to a reception coil of the reception device. The reception device has a function for providing feedback to the transfer device to reduce transmit power or a function for discharging overcurrent due to excessive transmit power by providing a clamp capacitor, in order to prevent overvoltage. However, the reception device may be damaged by excessive transmit power before providing feedback or there is a limitation in coping with rapidly changed overcurrent using the clamp capacitor alone.

[Disclosure]

[Technical Problem]

Embodiments may provide a wireless power transfer system capable of solving power transfer instability occurring due to rapid change in coupling coefficient between a transfer device and a reception device as the reception device is shaken while wirelessly charging the reception device, and a method of driving the same.

[Technical Solution]

In accordance with one embodiment, provided herein is a method of wirelessly transferring power from a transfer device to a reception device including transmitting a signal for detecting the reception device, receiving an identification packet from the reception device, reconfiguring a range of a driving frequency of the transfer device based on the identification packet of the reception device, and transferring wireless power generated in the reconfigured range of the driving frequency.

In the power transfer method according to the embodiment, the reconfiguring of the range of the driving frequency may include reconfiguring a minimum frequency and a maximum frequency of the driving frequency.

In the power transfer method according to the embodiment, the range of the driving frequency may be reconfigured based on a current threshold value of a reception-side coil unit included in the identification packet.

In the power transfer method according to the embodiment, the range of the driving frequency may be reconfigured based on the identification packet after receiving a control error packet from the reception device.

In the power transfer method according to the embodiment, the reconfigured minimum frequency of the driving frequency may be greater than a minimum frequency of a predetermined driving frequency of the transfer device.

In the power transfer method according to the embodiment, the reconfigured maximum frequency of the driving frequency may be less than a maximum frequency of a predetermined driving frequency of the transfer device.

The power transfer method according to the embodiment may further include receiving a control error packet from the reception device and generating wireless power based on information on a desired power amount of the reception device of the control error packet.

In the power transfer method according to the embodiment, the generating of the wireless power may include generating wireless power based on proportional integral differential (PID) control,

In the power transfer method according to the embodiment, the generating of the wireless power may include configuring a present controlled variable based on a difference between a preceding controlled variable according to a preceding control error packet and a product between a present PID control amount according to a present control error packet and a scaling factor, and generating wireless power based on the present controlled variable.

In the power transfer method according to the embodiment, the scaling factor may be changed based on the reconfigured range of the driving frequency.

In another aspect of the embodiment, provided herein is a method of, at a reception device, wirelessly receiving power from a transfer device, including transmitting a response signal to a detection signal from the transfer device, transmitting an identification packet to the transmission device, and receiving wireless power generated according to a range of a driving frequency reconfigured based on the identification packet.

In the power reception method according to the embodiment, the identification packet may include a current threshold value of the reception device, and the range of the driving frequency may be reconfigured based on the current threshold value.

In the power reception method according to the embodiment, a minimum frequency and a maximum frequency of the driving frequency may be reconfigured to reconfigure the range of the driving frequency.

In the power reception method according to the embodiment, the reconfigured minimum frequency of the driving frequency may be greater than a minimum frequency of a predetermined driving frequency of the transfer device.

In the power reception method according to the embodiment, the reconfigured maximum frequency of the driving frequency may be less than a maximum frequency of a predetermined driving frequency of the transfer device.

The power reception method according to the embodiment may further include comparing received wireless power with desired power and transferring a control error value to the transfer device according to a result of comparison. The control error value may be any one of a positive value, zero and a negative value, the power increasing request signal may correspond to a control error value of a positive value, a power maintenance request signal may correspond to a control error value of zero, and a power decreasing request signal may correspond to a control error value of a negative value.

In another aspect of the embodiment, provided herein is a transfer device including a transfer coil for transferring wireless power, a power converter for outputting power to the transfer coil, and a controller for controlling the power converter in order to control an amount of power output to the transfer coil, wherein the controller reconfigures a range of a driving frequency of the power converter based on an identification packet of a reception device for receiving the wireless power.

In the transfer device according to the embodiment, the identification packet may include a current threshold value of the reception device, and the range of the driving frequency may be reconfigured based on the current threshold value.

In the transfer device according to the embodiment, the power converter may operate as any one of a half-bridge inverter or a full-bridge inverter based on the identification packet.

In the transfer device according to the embodiment, the controller may control the amount of wireless power by adjusting any one of a driving frequency of the power converter, an input voltage, a duty cycle and phase shift.

In the transfer device according to the embodiment, the controller may include a first calculator for determining second current based on a power increasing request signal from the reception device and first current of the transfer coil, a proportional integral differential (PID) controller for determining a control amount based on PID control, and a second calculator for determining a present controlled variable based on the control amount and a preceding controlled variable, and the power converter may be controlled based on the present controlled variable.

In the transfer device according to the embodiment, the second calculator may determine the present controlled variable based on a difference between a product of the control amount and a scaling factor and the preceding controlled variable.

In the transfer device according to the embodiment, the scaling factor may be changed based on the reconfigured range of the driving frequency.

In another aspect of the embodiment, provided herein is a reception device including a controller for communicating with a transfer device to transfer an identification packet and a reception coil for receiving wireless power generated according to a range of a driving frequency reconfigured based on the identification packet.

In the reception device according to the embodiment, the identification packet may include a current threshold value of the reception device, and the range of the driving frequency may be reconfigured based on the current threshold value.

In the reception device according to the embodiment, a minimum frequency and a maximum frequency of the driving frequency may be reconfigured to reconfigure the range of the driving frequency.

In the reception device according to the embodiment, the reconfigured minimum frequency of the driving frequency may be greater than a minimum frequency of a predetermined driving frequency of the transfer device, and the reconfigured maximum frequency of the driving frequency may be less than a maximum frequency of a predetermined driving frequency of the transfer device.

[Advantageous Effects]

According to embodiments, it is possible to prevent power transfer instability from occurring by rapid change in coupling coefficient between transfer and reception devices as the reception device is shaken while wirelessly charging the reception device and to prevent the reception device from being heated and damaged.

[Description of Drawings]

FIG. 1 is a diagram showing a magnetic induction type equivalent circuit.
FIG. 2 is a diagram showing a magnetic resonance type equivalent circuit.
FIGS. 3a and 3b are block diagrams showing a transfer unit as one of subsystems configuring a wireless power transfer system.
FIG. 3c is a circuit diagram of a transfer-side power converter according to an embodiment.
FIGS. 4a and 4b are block diagrams showing a reception unit as one of subsystems configuring a wireless power transfer system.
FIG. 5 is a flowchart illustrating operation of a wireless power transfer system, which focuses on an operation phase of a transfer device according to an embodiment.
FIG. 6 is a graph showing a driving state of a power converter according to a load of a reception device.
FIG. 7 is a flowchart illustrating a desired power determination method of a reception device.
FIG. 8 is a graph showing the level of coil current on a transfer-side coil unit according to a driving frequency.
FIGS. 9 and 10 are flowcharts illustrating operation of a transfer device including a step of configuring a driving frequency boundary value.
FIG. 11 is a diagram showing a controller of a transfer device for a power transfer control method in detail.
FIG. 12 is a timing chart of a transfer device in a power transfer phase.

[Best Mode]

Hereinafter, a wireless power transfer system including a transfer device including a function for wirelessly transferring power and a reception device for wirelessly receiving power according to embodiments will be described in detail with reference to the accompanying drawings. The embodiments described below are merely provided by way of example in order to allow the spirit of the invention to be sufficiently conveyed to those skilled in the art. Thus, the embodiments are not limited to the embodiments described below and may be embodied in other forms. In addition, in the drawings, for example, sizes and thicknesses of constituent elements of a device may be exaggerated for convenience. The same reference numbers will be used throughout the specification to refer to the same or like constituent elements.

Embodiments selectively use various types of frequency bands from a low frequency (50 kHz) to a high frequency (15 MHz) for wireless power transfer and may include a communication system capable of exchanging data and control signals for system control.

Embodiments are applicable to various fields such as the portable terminal industry, smart watch industry, computer and laptop industry, home appliance industry, electric vehicle industry, medical device industry and robot industry, all of which use batteries or electronic devices requiring batteries.

Embodiments may consider a system capable of transferring power to one or more apparatuses using one or a plurality of transfer coils.

According to embodiments, a battery shortage problem of a mobile device such as a smartphone or a laptop may be solved. For example, when a smartphone or a laptop is used in a state of being placed on a wireless charging pad located on a table, the battery may be automatically charged and thus the smartphone or the laptop can be used for a long time. In addition, when a wireless charging pad is installed in public places such as cafés, airports, taxis, offices and restaurants, various mobile apparatuses can be charged regardless of the type of the charging terminal changed according to mobile apparatus manufacturer. In addition, when wireless power transfer technology is applied to household appliances such as cleaners, electric fans, etc., effort to find a power cable is not necessary and complicated wires are not required in the home, thereby reducing the number of wires in a building and making better use of space. In addition, it takes considerable time to charge an electric vehicle using a household power supply. In contrast, when high power is transferred through wireless power transfer technology, charging time can be reduced. In addition, when wireless charging equipment is mounted in a parking area, a power cable does not need to be provided near the electric vehicle.

The terms and abbreviations used in the embodiments are as follows:

Wireless power transfer system: system for wirelessly transferring power using a magnetic field.

Transfer device (wireless power transfer system-charger; power transfer unit (PTU)): device for wirelessly transferring power to a power receiver in a magnetic field and managing an overall system. This may be referred to as a transfer device or a transferer.

Reception device (wireless power transfer system-device; power receiver unit (PRU)): device for wirelessly receiving power from a power transmitter in a magnetic field. This may be referred to as a reception device or a receiver.

Charging area: Area for wirelessly transferring power in a magnetic field, which may be changed according to the size of an application product, desired power and operating frequency.

Scattering (S) parameter: The S parameter is a ratio of an input voltage to an output voltage in a frequency distribution, that is, a ratio of an input port to an output port (Transmission; S21) or a reflection value of an input/output port, that is, an output value returned after reflection of an input value (Reflection; S11, S22).

Quality factor Q: In resonance, the value of Q means the quality of frequency selection. The higher the Q value, the better the resonance characteristics. The Q value is expressed as a ratio of energy stored in a resonator to lost energy.

The wireless power transfer principles roughly include a magnetic induction method and a magnetic resonance method.

The magnetic induction method is non-contact energy transfer technology for placing a source inductor Ls and a load inductor Ll close to each other, enabling current to flow in the source coil Ls to generate a flux and generating electromotive force in the load coil L1 based on the flux. The magnetic resonance method is technology for coupling two resonators, that is, technology for wirelessly transferring energy using a resonance method of forming an electric field and a magnetic field in the same wavelength range while resonating at the same frequency by generating magnetic resonance by a natural frequency between two resonators.

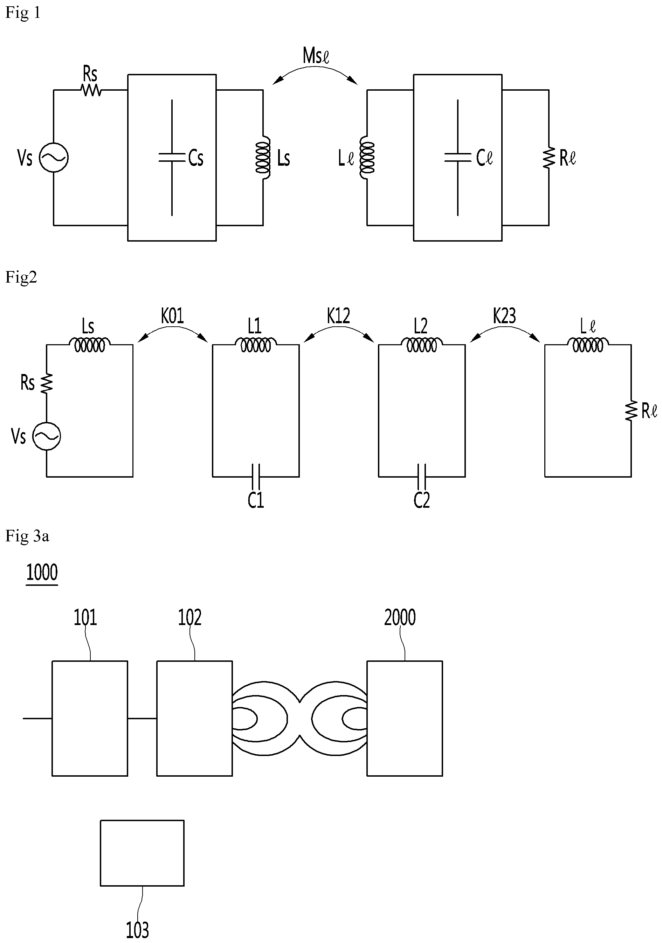

FIG. 1 is a diagram showing a magnetic induction type equivalent circuit.

Referring to FIG. 1, in the magnetic induction type equivalent circuit, a transfer unit may be implemented by a source voltage Vs according to a device for supplying power, a source resistor Rs, a source capacitor Cs for impedance matching and a source coil Ls for magnetic coupling with a reception unit, and the reception unit may be implemented by a load resistor Rl which is an equivalent resistor of the reception unit, a load capacitor Cl for impedance matching, and a load coil L1 for magnetic coupling with the transfer unit. A magnetic coupling degree of the source coil Ls and the load coil Ll may be represented by mutual inductance Msl.

In FIG. 1, the ratio S21 of the input voltage to the output voltage is obtained from a magnetic induction equivalent circuit including only a coil without the source capacitor Cs and load capacitor Cl for impedance matching, thereby finding a maximum power transfer condition. The maximum power transfer condition satisfies Equation 1 below.

$$\text{Equation 1}$$

$$Ls/Rs = Ll/Rl$$

According to Equation 1 above, when a ratio of inductance of the transfer coil Ls to the source resistor Rs is equal to a ratio of the inductance of the load coil Ll to the load resistor Rl, maximum power transfer is possible. In a system including only inductance, since a capacitor capable of compensating for reactance is not present, the reflection value S11 of the input/output port cannot become 0 at a maximum power transfer point and power transfer efficiency can be significantly changed according to mutual inductance Msl. Therefore, as a compensation capacitor for impedance matching, the source capacitor Cs may be added to the transfer unit and the load capacitor Cl may be added to the reception unit. The compensation capacitors Cs and Cl may be connected to the reception coil Ls and the load coil Ll in series or in parallel, respectively. In addition, for impedance matching, passive elements such as additional capacitors and inductors may be further included in the transfer unit and the reception unit, in addition to the compensation capacitors.

FIG. 2 is a diagram showing magnetic resonance type equivalent circuit.

Referring to FIG. 2, in the magnetic resonance type equivalent circuit, a transfer unit is implemented by a source coil configuring a closed circuit by series connection of a source voltage Vs, a source resistor Rs and a source inductor Ls and a transfer-side resonant coil configuring a closed circuit by series connection of a transfer-side resonant inductor L1 and a transfer-side resonant capacitor C1, and a reception unit is implemented by a load coil configuring a closed circuit by series connection of a load resistor Rl and a load inductor Ll and a reception-side resonant coil configuring a closed circuit by series connection of a reception-side resonant inductor L2 and a reception-side resonant capacitor C2. The source inductor Ls and the transfer-side inductor L1 are magnetically coupled with a coupling coefficient of K01, the load inductor Ll and the load-side resonant inductor L2 are magnetically coupled with a coupling coefficient of K23, and the transfer-side resonant inductor L1 and the reception-side resonant inductor L2 are magnetically coupled with a coupling coefficient of K12. In an equivalent circuit of another embodiment, the source coil and/or the load coil may be omitted and only the transfer-side resonant coil and the reception-side resonant coil may be included.

In the magnetic resonance method, when the resonant frequencies of the two resonators are equal, most of the energy of the resonator of the transfer unit may be transferred to the resonator of the reception unit, thereby improving power transfer efficiency. Efficiency of the magnetic resonance method becomes better upon satisfying Equation 2 below.

$$\text{Equation 2}$$

$$k/\Gamma \gg 1$$

(k being a coupling coefficient and $\Gamma$ being a damping ratio)

In order to increase efficiency in the magnetic resonance method, impedance matching elements may be added and the impedance matching elements may be passive elements such as an inductor and a capacitor.

A WPT system for transferring power using a magnetic induction method or a magnetic resonance method based on the wireless power transfer principle will now be described.

<Transfer unit>

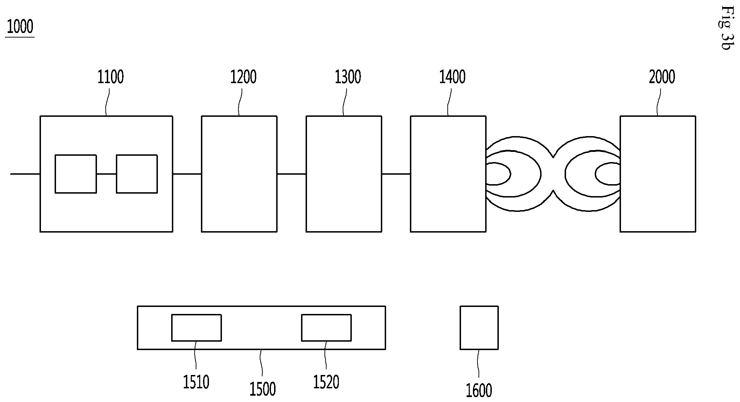

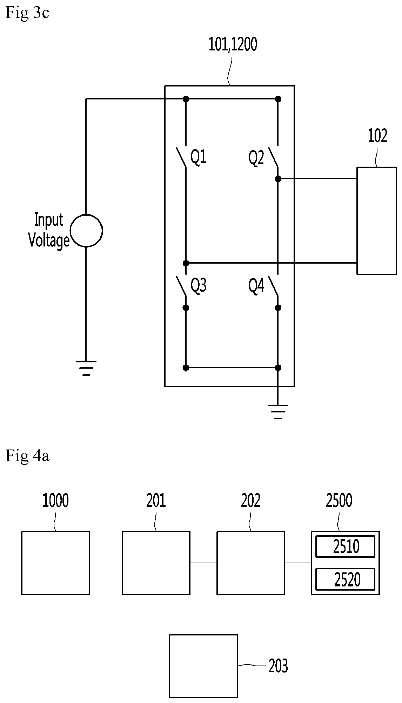

FIGS. 3a and 3b are block diagrams showing a transfer unit as one of subsystems configuring a wireless power transfer system. FIG. 3c is a circuit diagram of a transfer-side power converter according to an embodiment.

Referring to FIG. 3a, the wireless power transfer system according to the embodiment may include a transfer unit 1000 and a reception unit 2000 for wirelessly receiving power from the transfer unit 1000. The transfer unit 1000 may include a transfer-side power converter 101 for performing power conversion with respect to an input AC signal and outputting an AC signal, a transfer-side resonant circuit unit 102 for generating a magnetic field based on the AC signal output from the transfer-side power converter 101 and supplying power to the reception unit 2000 in a charging area, and a transfer-side controller 103 for controlling power conversion of the transfer-side power converter 101, adjusting the amplitude and frequency of the output signal of the transfer-side power converter 101, performing impedance matching of the transfer-side resonant circuit unit 102, sensing impedance, voltage and current information from the transfer-side power converter 101 and the transfer-side resonant circuit 102 and performing wireless communication with the reception unit 2000. The transfer-side power converter 101 may include at least one of a power converter for converting an AC signal into a DC signal, a power converter for changing the level of a DC signal and outputting a DC signal, and a power converter for converting a DC signal into an AC signal. The transfer-side resonant circuit unit 102 may include a coil and an impedance matching unit resonating with the coil. In addition, the transfer-side controller 103 may include a sensing unit for sensing impedance, voltage and current information and a wireless communication unit.

In addition, referring to FIG. 3b, the transfer unit 1000 may include a transfer-side AC/DC converter 1100, a transfer-side DC/AC converter 1200, a transfer-side impedance matching unit 1300, a transfer coil unit 1400 and a transfer-side communication and control unit 1500.

The transfer-side AC/DC converter 1100 may convert an externally input AC signal into a DC signal under control of the transfer-side communication and control unit 1500 and may include a rectifier 1110 and a transfer-side AC/AC converter 1120 as subsystems. The rectifier 1110 is a system for converting the received AC signal into a DC signal and may be implemented by a diode rectifier having relatively high efficiency upon high-frequency operation, a synchronous rectifier capable of being built in one chip, and a hybrid rectifier capable of reducing cost and space and having a high degree of freedom in terms of a dead time. The embodiments are not limited thereto and any system for converting an AC signal into a DC signal is applicable. In addition, the transfer-side DC/DC converter 1120 adjusts the level of the DC signal received from the rectifier 1110 under control of the transfer-side communication and control unit 1500, and examples thereof include a buck converter for decreasing the level of an input signal, a boost converter for increasing the level of an input signal, and a buck boost converter for decreasing or increasing the level of an input signal, or a Cuk converter. In addition, the transfer-side DC/DC converter 1120 may include a switch element for performing a power conversion control function, an inductor and capacitor for performing a power conversion intermediation function or an output voltage smoothing function, a transformer for performing a voltage gain adjustment or electrical separation (insulation) function, etc., and perform a function for removing a ripple component or pulsatory component (AC component included in the DC signal) included in the input DC signal. A difference between the command value of the output signal of the transfer-side DC/DC converter 1120 and an actual output value may be adjusted through a feedback method, which may be performed by the transfer-side communication and control unit 1500.

The transfer-side DC/AC converter 1200 is a system for converting the DC signal output from the transfer-side AC/DC converter 1100 into an AC signal under control of the transfer-side communication and control unit 1500 and adjusting the frequency of the converted AC signal, and examples thereof include a half-bridge inverter or a full-bridge inverter. The wireless power transfer system may include various amplifiers for converting DC into AC, e.g., A-class, B-class, AB-class, C-class, E-class and F-class amplifiers. In addition, the transfer-side DC/AC converter 1200 may include an oscillator for generating the frequency of the output signal and a power amplifier for amplifying the output signal.

In addition, the transfer-side power converter 101 of FIG. 3a or the transfer-side DC/AC converter 1200 of FIG. 3b may be driven as a half-bridge inverter or a full-bridge inverter according to control of the first to fourth switching elements Q1 to Q4 as shown in FIG. 3c.

For example, the converter may be driven as a half-bridge inverter by controlling the second and third switching elements Q2 and Q3 to be turned on and off in a state in which the first switching element Q1 is maintained in a turn-off state and the fourth switching element Q4 is maintained in a turn-on state and may be driven as a full-bridge inverter by controlling the first to fourth switching elements Q1 to Q4 to be turned on and off.

In the transfer-side DC/AC converter 1200 according to the embodiment, the second and third switching elements Q2 and Q3 may be alternately driven in the half-bridge inverter driving state and the first and fourth switching elements Q1 and Q4 and the second and third switching elements Q2 and Q3 may be alternately driven in the full-bridge inverter driving state.

In addition, the first to fourth switching elements Q1 to Q4 may be transistors.

The AC/DC converter 1100 and the transfer-side DC/AC converter 1200 may be replaced by an AC power supply, omitted or replaced by another element.

The transfer-side impedance matching unit 1300 minimizes a reflected wave to enable the signal to smoothly flow at a point having different impedances. Since the two coils of the transfer unit 1000 and the reception unit 2000 are separated from each other, the magnetic field is significantly leaked. Therefore, an impedance difference between the two connection ends of the transfer unit 1000 and the reception unit 2000 may be corrected, thereby improving power transfer efficiency. The transfer-side impedance matching unit 1300 may include at least one of an inductor, a capacitor and a resistor and change inductance of the inductor, capacitance of the capacitor and resistance of the resistor under control of the communication and control unit 1500, thereby adjusting the impedance value for impedance matching. When the wireless power transfer system transfers power using the magnetic induction method, the transfer-side impedance matching unit 1300 may have a series resonant structure or a parallel resonant structure and increase an induction coupling coefficient between the transfer unit 1000 and the reception unit 2000, thereby minimizing energy loss. When the wireless power transfer system transfers power using the magnetic resonance method, the transfer-side impedance matching unit 1300 may correct impedance matching in real time by change in matching impedance on an energy transmission line due to change in distance between the transfer unit 1000 and the reception unit 2000 or change in properties of the coil according to mutual influence of a plurality of devices and metal foreign objects (FOs). Examples of the correction method may include a multi-matching method using a capacitor, a matching method using multiple antennas and a method using multiple loops.

The transfer-side coil 1400 may be implemented by one or a plurality of coils. If the transfer-side coil 1400 includes a plurality of coils, the coils may be spaced apart from each other or overlap each other. If the coils overlap each other, the overlapping area may be determined in consideration of a flux density variation. In addition, the transfer-side coil 1400 may be manufactured in consideration of internal resistance and radiation resistance. At this time, if a resistance component is small, a quality factor may be increased and transmission efficiency may be increased.

The communication and control unit 1500 may include a transfer-side controller 1510 and a transfer-side communication unit 1520. The transfer-side controller 1510 may be responsible for adjusting the output voltage of the transfer-side AC/DC converter 1100 or current Itx_coil flowing in the transfer coil in consideration of at least one of desired power of the reception unit 2000, a current charging amount, the voltage Vrect of the rectifier output terminal of the reception unit, charging efficiency of each of a plurality of reception units and a wireless power transfer method. In consideration of maximum power transfer efficiency, frequencies and switching waveforms for driving the transfer-side DC/AC converter 1200 may be generated to control power to be transferred. In addition, overall operation of the reception unit 2000 may be controlled using an algorithm, program or application read from a memory (not shown) of the reception unit 2000 and required for control. Meanwhile, the transfer-side controller 1510 may be referred to as a microprocessor, a microcontroller unit, or a Micom. The transfer-side communication unit 1520 may perform communication with the reception-side communication unit 2620 and examples of the communication method may include a short-range communication method such as Bluetooth, NFC or ZigBee. The transfer-side communication unit 1520 and the reception-side communication unit 2620 may transmit and receive charging state information and charging control commands. The charging state information may include the number of reception units 2000, a battery residual amount, the number of times of charging, a battery capacity, a battery ratio and a transmit power amount of the transfer unit 1000. In addition, the transfer-side communication unit 1520 may transmit a charging function control signal for controlling the charging function of the reception unit 2000, and the charging function control signal may be a control signal for controlling the reception unit 2000 to enable or disable the charging function.

The transfer-side communication unit 1520 may perform communication in an out-of-band format as a separate module. Embodiments are not limited thereto and communication may be performed in an in-band format for enabling a transfer unit to transfer a signal to a reception unit using feedback shift sent from the reception unit to the transfer unit using a power signal transferred by the transfer unit and frequency shift of the power signal transferred by the transfer unit. For example, the reception unit may modulate the feedback signal and transfer charging start, charging end and battery state information to the transfer unit through the feedback signal. In addition, the transfer-side communication unit 1520 may be configured separately from the transfer-side controller 1510. In the reception unit 2000, the reception-side communication unit 2620 may be included in the controller 2610 of the reception device or be provided separately from the controller 2610 of the reception device.

In addition, the transfer unit 1000 of the wireless power transfer system according to the embodiment may further include a detector 1600.

The detector may detect at least one of the input signal of the transfer-side AC/DC converter 1100, the output signal of the transfer-side AC/DC converter 1100, the input signal of the transfer-side DC/AC converter 1200, the output signal of the transfer-side DC/AC converter 1200, the input signal of the transfer-side impedance matching unit 1300, the output signal of the transfer-side impedance matching unit 1300, the input signal of the transfer-side coil 1400 or the signal of the transfer-side coil 1400. For example, the signal may include at least one of information on current, information on voltage or information on impedance. The detected signal is fed back to the communication and control unit 1500. The communication and control unit 1500 may control the transfer-side AC/DC converter 1100, the transfer-side DC/AC converter 1200 and the transfer-side impedance matching unit 1300 based on the detected signal. In addition, the communication and control unit 1500 may perform foreign object detection (FOD) based on the result detected by the detector 1600. The detected signal may be at least one of a voltage and current. Meanwhile, the detector 1600 may be implemented in hardware different from that of the communication and control unit 1500 or the detector 1600 and the communication and control unit 1500 may be implemented together in hardware.

<Reception Unit>

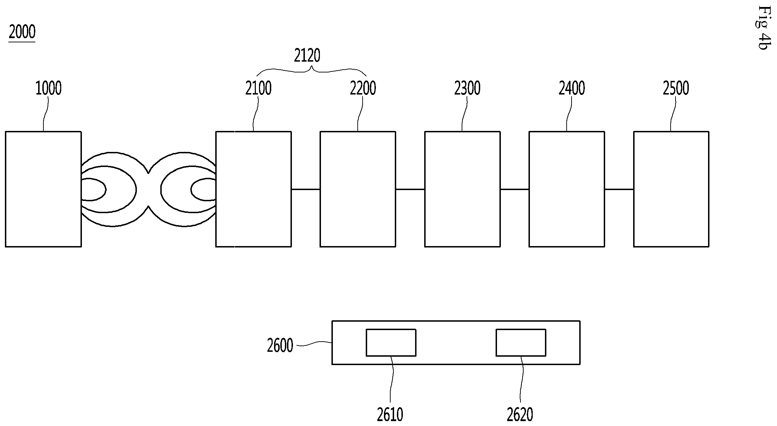

FIGS. 4a and 4b are block diagrams showing a reception unit (or a reception device) as one of subsystems configuring a wireless power transfer system. Referring to FIG. 4a, the wireless power transfer system according to the embodiment may include a transfer unit 1000 and a reception unit 2000 for wirelessly receiving power from the transfer unit 1000. The reception device 2000 may include a reception-side resonant circuit unit 201 for receiving an AC signal from the transfer device 1000, a reception-side power converter 202 for performing power conversion of AC power from the reception-side resonant circuit unit 201 and outputting a DC signal, a load 2500 charged by receiving the DC signal output from the reception-side power converter 202, and a reception-side controller 203 for sensing the current/voltage of the reception-side resonant circuit unit 201, performing impedance matching of the reception-side resonant circuit unit 201, controlling power conversion of the reception-side power converter 202, adjusting the level of the output signal of the reception-side power converter 202, or sensing input or output voltage or current of the reception-side power converter 202, controlling supply of the output signal of the reception-side power converter 202 to the load 2500 or performing communication with the transfer device 1000. The reception-side power converter 202 may include at least one of a power converter for converting an AC signal into a DC signal, a power converter for changing the level of a DC signal and outputting a DC signal, and a power converter for converting a DC signal into an AC signal. In addition, referring to FIG. 4b, the wireless power transfer system according to the embodiment may include a transfer unit (or a transfer device) 1000 and a reception unit (or a reception device) 2000 for wirelessly receiving power from the transfer unit 1000. The reception unit 2000 may include a reception-side resonant circuit unit 2120 including a reception-side coil unit 2100 and a reception-side impedance matching unit 2200, a reception-side AC/DC converter 2300, a DC/DC converter 2400, a load 2500 and a reception-side communication and control unit 2600. The reception-side AC/DC converter 2300 may be referred to as a rectifier for rectifying an AC signal into a DC signal.

The reception-side coil unit 2100 may receive power through the magnetic induction method or the magnetic resonance method. At least one of an induction coil or a resonant coil may be included according to the power reception method.

As one embodiment, the reception-side coil unit 2100 may be provided in a portable terminal along with a near field communication (NFC) antenna. The reception-side coil unit 2100 may be equal to the transfer-side coil unit 1400 and the size of the reception antenna may be changed according to the electrical properties of the reception unit 200.

The reception-side impedance matching unit 2200 may perform impedance matching between the transfer unit 1000 and the reception unit 2000.

The reception-side AC/DC conversion unit 2300 rectifies the AC signal output from the reception-side coil unit 2100 and generates a DC signal. The output voltage of the reception-side AC/DC converter 2300 may be referred to as a rectified voltage Vrect. The reception-side communication and control unit 2600 may detect or change the output voltage of the reception-side AC/DC converter 2300 and transmit, to the transfer unit 100, state parameter information such as information on a minimum rectified voltage Vrect_min (or a minimum output voltage Vrect min) as a minimum value of the output voltage of the reception-side AC/DC converter 2300, a maximum rectified voltage (Vrect_max)(or a maximum output voltage (Vrect max)) as a maximum value, an optimal rectified voltage Vrect_set (or an optimal output voltage Vrect set) having any one of the minimum value and the maximum value.

The reception-side DC/DC converter 2400 may adjust the level of the DC signal output from the reception-side AC/DC converter 2300 according to the capacity of the load 2500.

The load 2500 may include a battery, a display, an audio output circuit, a main processor, a battery manager and various sensors. The load 2500 may include at least a battery 2510 and a battery manager 2520 as shown in FIG. 4a. The battery manager 2520 may sense the charging state of the battery 2510 to adjust the voltage and current applied to the battery 2510.

The reception-side communication and control unit 2600 may be activated by wakeup power from the transfer-side communication and control unit 1500 to perform communication with the transfer-side communication and control unit 1500 and to control operation of the subsystem of the reception unit 2000.

One or a plurality of reception units 2000 may be included to simultaneously and wirelessly receive energy from the transfer unit 1000. That is, in the magnetic resonance type wireless power transfer system, a plurality of target reception units 2000 may receive power from one transfer unit 1000. At this time, the transfer-side matching unit 1300 of the transfer unit 1000 may adaptively perform impedance matching between the plurality of reception units 2000. This is equally applicable to the case in which a plurality of reception-side coil units independent of each other in the magnetic induction method is included.

In addition, if a plurality of reception units 2000 is provided, power reception methods may be equal or different. In this case, the transfer unit 1000 may transfer power using the magnetic induction method, the magnetic resonance method or a combination thereof.

Meanwhile, in a relation between the level and frequency of the signal of the wireless power transfer system, in the case of magnetic induction type wireless power transfer, in the transfer unit 1000, the transfer-side AC/DC converter 1100 may receive and convert an AC signal of several tens or several hundred Hz (e.g., 60 Hz) of several tens or several hundred V (e.g., 110 V to 220 V) into a DC signal of several V to several tens or several hundred V (e.g., 10 to 20 V) and the transfer-side DC/AC converter 1200 receives a DC signal and output an AC signal of kHz band (e.g., 125 kHz). The reception-side AC/DC converter 2300 of the reception unit 2000 may receive and convert an AC signal of KHz band (e.g., 125 kHz) into a DC signal of several V to several tens or several hundred V (e.g., 10 V to 20 V), and the reception-side DC/DC converter 2400 may output a DC signal of 5 V, which is suitable for the load 2500, to the load 2500. In the case of magnetic resonance type wireless power transfer, in the transfer unit 1000, the transfer-side AC/DC converter 1100 may receive and convert an AC signal of several tens or several hundreds of Hz (e.g., 60 Hz) of several tens or several hundred V (e.g., 110 V to 220 V) into a DC signal of several V to several tens or several hundred V (e.g., 10 to 20 V), and the transfer-side DC/AC converter 1200 receives a DC signal and outputs an AC signal of MHz band (e.g., 6.78 MHz). The reception-side AC/DC converter 2300 of the reception unit 2000 may receive and convert an AC signal of MHz band (e.g., 6.78 MHz) into a DC signal of several V to several tens or several hundred V (e.g., 10 V to 20 V) and the reception-side DC/DC converter 2400 may output a DC signal of 5 V, which is suitable for the load 2500, to the load 2500.

<Operation phase of transfer device>

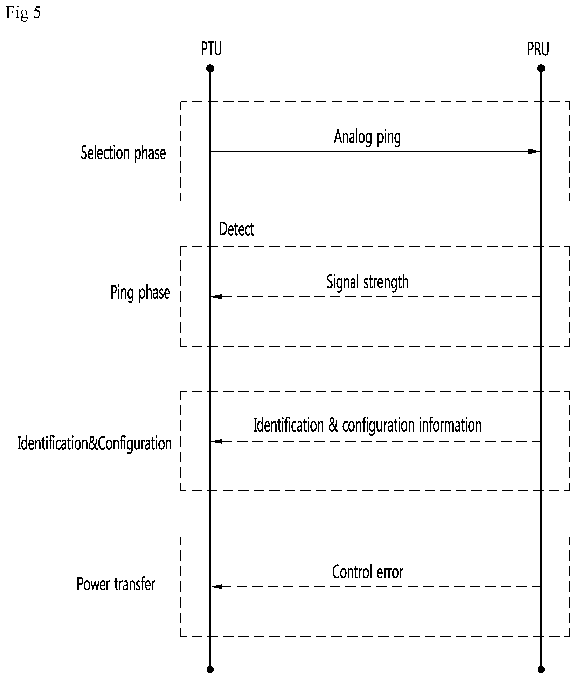

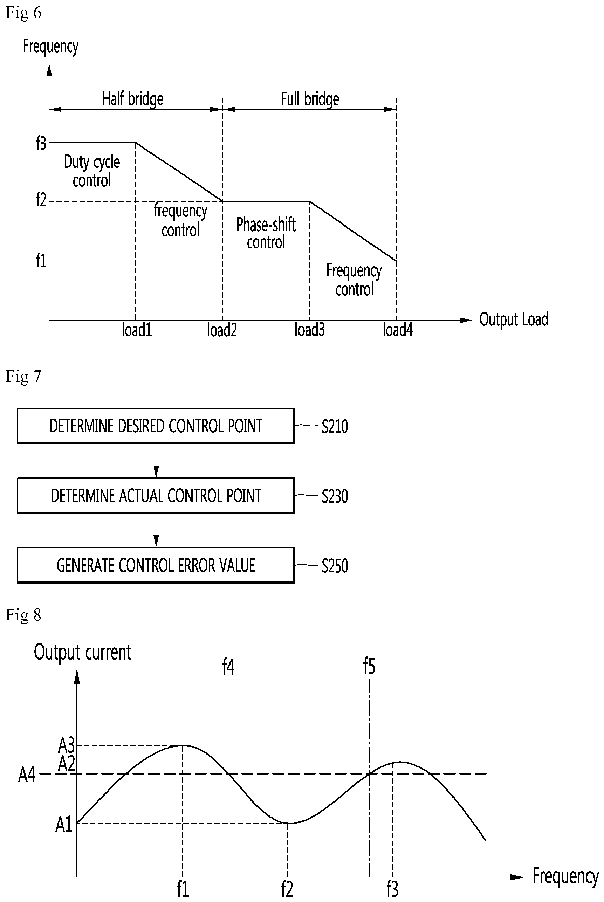

FIG. 5 is a flowchart illustrating operation of a wireless power transfer system, which focuses on an operation phase of a transfer device according to an embodiment. In addition, FIG. 6 is a graph showing a driving state of a power converter according to a load of a reception device.

Referring to FIG. 5, the transfer device according to the embodiment may have at least 1) a selection phase, 2) a ping phase, 3) an identification and configuration phase, 4) a power transfer phase and 5) a charging end phase.

[Selection Phase]

(1) In the selection phase, the transfer device 1000 may perform a ping process in order to select the reception device 2000 in a sensing area or a charging area.

(2) The sensing area or the charging area may mean an area in which an object influences the power properties of the transfer-side power converter 101, as described above. As compared to the ping phase, in the selection phase, a ping process for selection of the reception device 200 is a process of detecting change in amount of power forming a wireless power signal in the power converter of the transfer device 1000 and checking whether an object is present in a predetermined range, instead of a method of receiving a response from the reception device 2000 using a power control message. The ping process of the selection phase may be referred to as an analog ping process because an object is detected using a wireless power signal, not using a digital packet of the below-described ping phase.

(3) In the selection phase, the transfer device 1000 may sense that an object enters or exits the sensing area or the charging area. In addition, the transfer device 1000 may distinguish the reception device 2000 capable of wirelessly transferring power and the other objects (keys, coins, etc.) from objects in the sensing area or the charging area. As described above, since a wireless power transfer distance is changed according to an induction coupling method and a resonance coupling method, the sensing area in which an object is detected in the selection phase may be changed.

(4) First, if power is transferred according to the induction coupling method, the transfer device 1000 in the selection phase may monitor an interface surface (not shown) in order to sense placement and removal of objects. In addition, the transfer device 1000 may sense the position of the wireless power reception device 2000 located on the interface surface.

(5) When the transfer device 1000 includes one or more transfer coils, the selection phase transitions to the ping phase. In the ping phase, whether a response to the ping signal is transferred from the object is determined using each coil or the transfer device enters the identification phase to determine whether identification information is transferred from the object. The transfer device 1000 may determine coils to be used for wireless power transfer based on the position of the reception device 2000 acquired through such a process.

(6) In addition, when power is transferred according to the resonance coupling method, the transfer device 1000 in the selection phase may sense that one or more of the frequency, current and voltage of the power converter are changed due to the object in the sensing area or the charging area, thereby detecting the object.

(7) The transfer device 1000 in the selection phase may detect an object using at least one of detection methods according to the induction coupling method and the resonance coupling method.

(8) The transfer device 1000 may perform an object ping process according to a power transfer method and select an object detection method from among coupling methods for wireless power transfer in order to proceed to subsequent phases.

(9) Meanwhile, a wireless power signal formed by the transfer device 1000 in the selection phase in order to detect an object and a wireless power signal formed for digital detection, identification, configuration and power transfer may be different in terms of properties such as frequency or strength. The selection phase of the transfer device 1000 corresponds to an idle phase for detecting an object, such that the transfer device 100 generates a signal specialized for efficient object detection or power consumption reduction.

[Ping Phase]

(1) In the ping phase, the transfer device 1000 may perform a process of detecting the reception device 2000 in the sensing area or the charging area through a power control message. As compared to the ping process of the reception device 200 using the properties of the wireless power signal in the selection phase, the ping process in the ping phase may be referred to as a digital ping process.

(2) The transfer device 1000 may form a wireless power signal for detecting the reception device 2000, demodulate the wireless power signal modulated by the reception device 2000, and acquire a power control message of a digital data format corresponding to the response to the ping signal from the demodulated wireless power signal.

(3) The transfer device 1000 receives the power control message corresponding to the response to the ping signal, thereby recognizing the reception device 2000, to which power will be transferred.

(4) The ping signal formed by the transfer device 1000 in the ping phase in order to perform the digital ping process may be a wireless power signal formed by applying a power signal of a specific operation pint for a predetermined time.

Here, the operating point may mean the frequency, duty cycle and amplitude of the voltage applied to the transfer coil unit 1400.

The transfer device 1000 may generate the ping signal by applying the power signal of the specific operating point for the predetermined time and attempt to receive the power control message from the reception device 2000.

(5) Meanwhile, the power control message corresponding to the response to the ping signal may be a message indicating the strength of the wireless power signal received by the reception device 2000. For example, the reception device 2000 may transmit a signal strength packet included in the message indicating the strength of the wireless power signal received as a response to the ping signal. The packet may be configured to include a header indicating a packet indicating signal strength and a message indicating the strength of the power signal received by the reception device 2000. The strength of the power signal in the message may indicate a degree of induction or resonance coupling for transfer of power between the transfer device 1000 and the reception device 2000.

(6) The transfer device 1000 may extend the digital ping process and enter the identification and configuration phase after receiving the response message to the ping signal and finding the reception device 2000. That is, the transfer device 1000 may maintain the power signal of the specific operating point and receive a necessary power control message in the identification and configuration phase, after finding the reception device 2000.

However, when the transfer device 100 does not find the reception device 2000, to which power is transferred, the operation phase of the transfer device 1000 may be returned to the selection phase.

[Identification and Configuration Phase]

(1) In the identification and configuration phase, the transfer device 1000 may receive identification information and/or configuration information from the reception device 2000 to efficiently control power transfer.

(2) In the identification and configuration phase, the reception device 2000 may transmit a power control message including the identification information thereof. To this end, the reception device 2000 may transmit an identification packet including a message indicating the identification information of the reception device 2000. The packet may be configured to include a header indicating a packet indicating the identification information and a message including the identification information of the reception device 2000. The message may be configured to include information indicating the version of the protocol for wireless power transfer, information for identifying the manufacturer of the reception device 2000, information indicating presence/absence of an extended device identifier and a basic device identifier. In addition, if the information indicating presence/absence of the extended device identifier indicates that the extended device identifier is present, an extended identification packet including the extended device identifier may be separately transmitted. The packet may be configured to include a header indicating a packet indicating the extended device identifier and a message including the extended device identifier. If the extended device identifier is used, information based on the identification information of the manufacturer, the basic device identifier and the extended device identifier may be used to identify the reception device 2000.

(3) In the identification and configuration phase, the reception device 2000 may transmit a power control message including information on predicted maximum power. To this end, the reception device 2000 may transmit a configuration packet, for example. The packet may be configured to include a header indicating the configuration packet and a message including information on the predicted maximum power.

The message may be configured to include a power class, information on predicted maximum power, an indicator indicating a method of determining current of a main cell of the wireless power transfer device 1000 and the number of selective configuration packets. The indicator may indicate whether the current of the main cell of the transfer device 1000 is determined according to wireless power transfer contract.

(4) Meanwhile, the transfer device 1000 may generate power transfer contracts used for the reception device 2000 and power charging based on the identification information and/or the configuration information. The power transfer contract may include limits of parameters for determining the power transfer characteristics in the power transfer phase.

(5) The transfer device 1000 may end the identification and configuration phase and return to the selection phase, before entering the power transfer phase. For example, the transfer device 1000 may end the identification and configuration phase in order to find another reception device capable of wirelessly receiving power.

[Power Transfer Phase]

(1) In the power transfer phase, the transfer device 1000 transfers power to the reception device 2000.

(2) In this case, the transfer device 1000 may control the power converter 101 to transfer wireless power according to the version of the reception device 2000 based on the received identification packet. Specifically, the power converter 101 may be driven as a half-bridge inverter to transfer wireless power if the reception device 2000 corresponds to a low power class as a result of checking the version of the reception device 2000, and may be driven as a full-bridge inverter to transfer wireless power if the reception device 2000 corresponds to a middle power class. More specifically, referring to FIG. 6, it can be seen that the load of the reception device 2000 is increased as the version of the reception device 2000 is changed from the low power class to the middle power class. In this case, as the power converter 101 of the transfer device 1000 is driven as the half-bridge inverter, it is possible to transfer wireless power to the reception device 2000 corresponding to a small load, that is, a low power class.

In addition, it is possible to adjust the amount of wireless power through at least one of a method of changing the duty ratios of the switching elements Q2 and Q3 and a switching frequency changing method with respect to the low-power-class reception device 2000 having a smaller load than a second load Load2. Specifically, it is possible to adjust the amount of wireless power by adjusting the duty ratio in a state of fixing the switching frequencies of the switching elements Q2 and Q3 of the power converter 101 to a third driving frequency f3 with respect to the reception device 2000 having a load less than a first load Load1 and to adjust the amount of wireless power by adjusting a switching frequency, that is, changing a frequency between the third driving frequency f3 and a second driving frequency f2 in a state of fixing the duty ratio, with respect to the reception device 2000 having a load greater than the first load Load1 and less than the second load Load2. However, embodiments are not limited to that shown in the drawing and the amount of wireless power may be adjusted according to switching frequency change with respect to the reception device 2000 having a load less than the first load Load1 and the amount of wireless power may be adjusted according to duty ratio change with respect to the reception device 2000 having a load greater than the first load Load1 and less than the second load Load2. In addition, the switching frequency and the duty ratio may be simultaneously changed and the amount of wireless power may be adjusted, with respect to the reception device 2000 having a load less than the second load Load2.

In addition, the power converter 101 is driven as a full-bridge inverter and the amount of wireless power may be adjusted through phase shift or switching frequency change in a state of fixing the switching frequencies of the switching elements Q1 to Q4 with respect to the middle-power-class reception device 2000 having a load greater than the second load Load2. Specifically, the amount of wireless power may be adjusted through phase shift in a state of fixing the driving frequencies of the switching elements Q1 to Q4 of the power converter 101 to a second driving frequency f2 with respect to the reception device 2000 having a load greater than the second load Load2 and less than a third load Load3 and the amount of wireless power may be adjusted through switching frequency change of the switching elements Q1 to Q4 of the power converter 101, that is, driving frequency change between the second driving frequency f2 and the first driving frequency f1, with respect to the reception device 2000 having a load greater than the third load Load3. However, embodiments are not limited to that shown in the drawing and the amount of wireless power may be adjusted according to switching frequency change with respect to the reception device 2000 having a load greater than the second load Load2 and less than the third load Load3 and the amount of wireless power may be adjusted according to phase shift with respect to the reception device 2000 having a load greater than the third load Load3. In addition, the amount of wireless power may be adjusted through switching frequency change and phase shift with respect to the reception device 2000 having a load greater than the second load Load2.

(3) The transfer device 1000 may receive a power control message from the reception device 2000 while transferring power and adjust the properties of power applied to the transfer coil unit 1400 in correspondence with the received power control message. For example, the power control message used to adjust the power properties of the transfer coil may be included in a control error packet. The packet may be configured to include a header indicating the control error packet and a message including a control error value. The transmission 1000 may adjust power applied to the transfer coil according to the control error value. That is, if the control error value is 0, since the desired control point of the reception device 2000 is substantially equal to the actual control point of the reception device 2000, current applied to the transfer coil is maintained. The current applied to the transfer coil is decreased when the control error value is a negative value and is increased when the control error value is a positive value.

(4) In addition, the transfer device 1000 may drive the power converter 101 as a half-bridge inverter at an initial driving time of a power transfer phase, determine the version of the reception device 2000 based on the received identification packet after receiving a first control error packet, continuously drive the power converter as the half-bridge inverter if the reception device 2000 corresponds to a low power class, and change the power converter to be driven as a full-bridge inverter if the reception device corresponds to a middle power class.

(5) In the power transfer phase, the transfer device 1000 may monitor parameters in the power transfer contract generated based on the identification information and/or the configuration information. As a result of monitoring the parameters, if transfer of power to the reception device 2000 violates the limits included in the power transfer contract, the transfer device 1000 may cancel power transfer and return to the selection phase.

(6) In addition, the power transfer contract may include boundary conditions for a threshold current value of current induced on the reception coil unit 2100 of the reception device 2000 and the properties of power transferred to the transfer device 1000 to the reception device 2000. (5) The transfer device 1000 may end the power transfer phase based on the power control message received from the reception device 2000.

For example, when charging of the battery is completed while the battery is charged using power transferred to the reception device 2000, a power control message for requesting end of wireless power transfer may be delivered to the transfer device 1000. In this case, the transfer device 1000 may end wireless power transfer and return to the selection phase, after receiving the message for requesting end of power transfer.

As another example, the reception device 2000 may deliver a power control message for requesting renegotiation or reconfiguration in order to update the already generated power transfer contract. The reception device 2000 may deliver a message for requesting renegotiation of the power transfer contract when requiring power less or greater in amount than the amount of currently transferred power. In this case, the transfer device 1000 may end wireless power transfer and return to the identification and configuration phase, after receiving the message for requesting renegotiation of the power transfer contract.

To this end, the message transferred by the reception device 2000 may be an end power transfer packet shown in FIG. 18, for example. The packet may be configured to include a header indicating an end power transfer packet and a message including the end power transfer code indicating the reason why power transfer ends. The end power transfer code may indicate any one of charge complete, internal fault, over temperature, over voltage, over current, battery failure, reconfigure, no response, and unknown.

<Power Transfer Control>

- Method of determining desired power of reception device

FIG. 7 is a flowchart illustrating a desired power determination method of a reception device.

Referring to FIG. 7, the reception device 2000 may perform steps of 1) determining a desired control point (S210), 2) detecting an actual control point (S230) and 3) generating a control error value (S250), thereby determining power to be received, that is, desired power.

Specifically, in step S210 of determining the desired control point, the reception device 2000 may determine a desired control point of voltage, current, temperature, etc. In step S230 of detecting the actual control point, the reception device 2000 may determine an actual control point of actual voltage, current, temperature, etc. The reception device 2000 may apply various methods such as voltage or current detection, temperature sensing, etc. upon determining the actual control point, and perform such a process anytime in the power transfer phase. In step S250 of generating the control error value, the reception device 2000 may generate a control error value based on a difference between the desired control voltage value and the actual control voltage value. In addition, the control error value may be a parameter indicating a positive value and a negative value. The control error value is a positive value when the desired power is less than actual power, is a negative value when the desired power is greater than actual power, and is zero when the desired power is equal to actual power. In such a power control process, a coupling coefficient may be rapidly decreased according to alignment between the transfer device 1000 and the reception device 2000 and thus the desired power amount of the reception device 2000 may be instantaneously increased. In addition, the reception device 2000 may request the desired power amount required to allow current induced in the reception-side coil unit 210 to exceed a threshold value from the transfer device 1000 but the transfer device 1000 may transmit wireless power generated in the range of the driving frequency reconfigured based on the threshold value of current induced in the reception-side coil unit 2100, thereby preventing the reception device 2000 from being damaged.

Meanwhile, the control error value may be transferred to the transfer device 1000 in the form of a control error packet.

When new transmit power is received from the transfer device, which has received the control error value, whether the new transmit power satisfies the desired power may be determined through the above-described steps.

<Power control method>

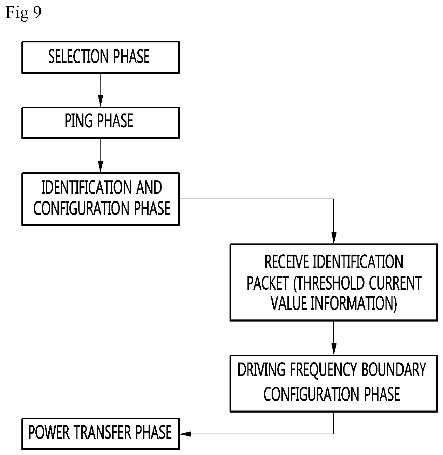

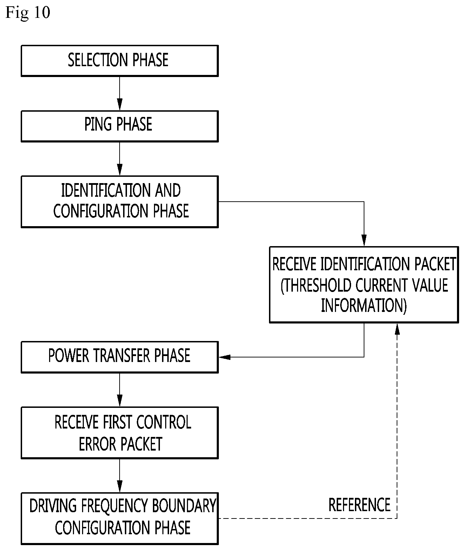

FIG. 8 is a graph showing the level of coil current on a transfer-side coil part according to a driving frequency. FIGS. 9 and 10 are flowcharts illustrating operation of a transfer device including a step of configuring a driving frequency boundary value.

Referring to FIG. 8, the power converter 101 may operate as any one of a half-bridge inverter or a full-bridge inverter depending on whether the version of the reception device 2000 included in the identification packet received in the identification and configuration phase is a low power class or a middle power class and the switching frequency of the power converter 101 may be any one of the driving frequency values in the range of the first driving frequency f1 to the third driving frequency f3.

In addition, the frequency values of the first driving frequency f1 which is the minimum frequency and the third driving frequency f3 which is the maximum frequency may be predetermined according to the capacity or type of the transfer device 1000.

In general, if the coupling coefficient of the transfer device 1000 and the reception device 2000 is greater than 0.5, the switching frequency may be a second driving frequency f2. At this time, transfer coil current on the transfer-side coil unit 1400 may be first current A1. At this time, the driving frequency may be changed in order to increase the amount of wireless power. That is, the amount of wireless power may be increased by increasing the driving frequency in the half-bridge inverter driving state and may be increased by decreasing the driving frequency in the full-bridge inverter driving state. In order to constantly maintain the amount of power to be received by the reception device 2000 in response to the coupling coefficient becoming less than 0.5 according to misalignment of the reception device 2000, the amount of wireless power may be increased by increasing the driving frequency in the half-bridge inverter driving state and may be increased by decreasing the driving frequency in the full-bridge inverter driving state.

However, when the coupling coefficient is rapidly changed or the coupling coefficient is significantly lowered, the driving frequency may be changed to the first driving frequency f1 which is the minimum driving frequency or the third driving frequency f3 which is the maximum driving frequency. In this case, current applied to the transfer-side coil unit 1400 may reach second current A2 or more and third current A3. In this case, as shown in FIG. 9, since the amount of current induced in the reception-side coil unit 210 of the reception device 2000 may be rapidly increased to damage the reception device 2000, the boundary value of the driving frequency may be reconfigured to prevent damage. The boundary value of the driving frequency may be reconfigured before entering the power transfer phase based on information on the current threshold value of the reception device 2000 included in the identification packet. In addition, the boundary value of the driving frequency may be reconfigured based on information on the current threshold value of the reception device 2000 included in the identification packet after receiving a first control error packet in a state of entering the power transfer phase as shown in FIG. 10. For example, if the amount of current induced in the reception-side coil unit 210 corresponds to a threshold value when current applied to the transfer-side coil unit 1400 corresponds to fourth current A4, the boundary value of the driving frequency of the transfer device 1000 may be set to a frequency in fourth to fifth driving frequencies f4 and f5 matching the fourth current A4.

In addition, in a state of fixing the driving frequency, the level of transfer coil current on the transfer-side coil unit 1400 may be changed through phase shift or change in duty ratio of the switching element and thus the amount of current induced in the reception-side coil unit 2100 may be adjusted. Even in this case, the level of transfer coil current on the transfer-side coil unit 1400 may be restricted in consideration of the threshold value of the amount of current induced in the reception-side coil unit 2100, thereby preventing the reception device 2000 from being damaged.

<Power Transfer Control Method>

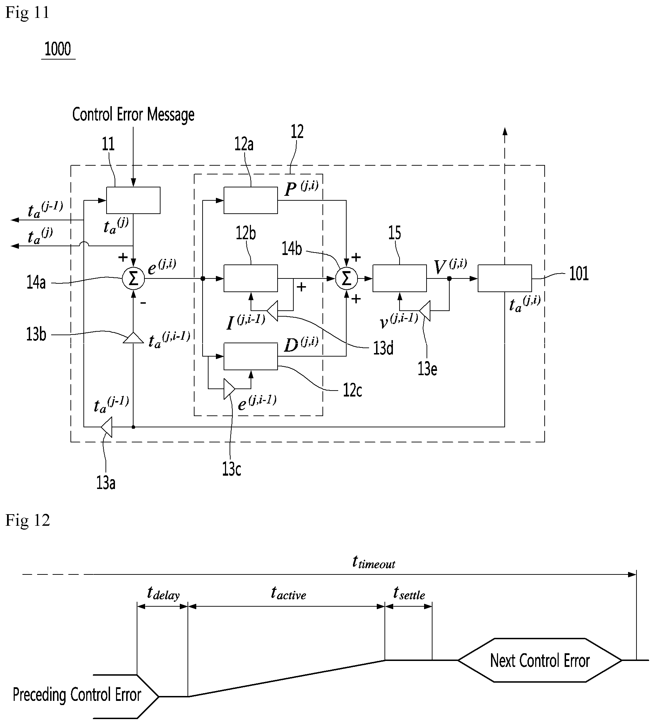

FIG. 11 is a diagram showing a controller of a transfer device for a power transfer control method in detail, and FIG. 12 is a timing chart of a transfer device in a power transfer phase.

Referring to FIG. 11, as a power transfer control method, the controller 103 of the transfer device 1000 may control the current of the transfer coil unit 1400 to become new transfer coil current. Such power transfer control may be performed based on a proportional integral differential (PID) algorithm.

In order to perform the PID algorithm, the transfer device 1000 may include a first calculator 11, a second calculator 15, a proportional controller 12a, an integral controller 12b, a derivative controller 12c, first to fifth amplifiers 13a, 13b, 13c, 13d and 13e and first and second summers 14a and 14b and perform the following process to control the power converter 101.

j=1, 2, 3, ... may indicate the order of control error packets received by the transfer device 1000. Each of the first to fifth amplifiers 13a, 13b, 13c, 13d and 13e may have at least one of an amplifier, a buffer and a delay unit.

(1) New transfer coil current calculation step

1) When the first calculator 11 of the transfer device 1000 receives the control error packet, new transfer coil current td(j) may be calculated according to Equation 3.

Equation 3

$$t_d^{(i)} = t_a^{(i-1)} \times \left[ 1 + \frac{c^{(j)}}{128} \right]$$

2) Here, ta(j-1) may denote actual (present) transfer coil current (actual primary cell current) determined according to a preceding control error packet c(j-1), and c(j) may denote a control error value included in a j(th) control error packet. In addition, ta(0) may mean current of the transfer coil unit 1400 at the start point of the power transfer phase. A magnetic field may be generated in the transfer coil unit 1400 based on the transfer coil current, thereby generating output power.

3) The first calculator 11 receives the j-th control error packet and the actual transfer coil current ta(j-1) through the first amplifier 13a, performs the calculation process according to Equation 3 above, and calculates and outputs new transfer coil current td(j).

4) If the control error value c(j) is not zero (nonzero), the transfer device 1000 may adjust the transfer coil current during a predetermined time (t_active of FIG. 13). To this end, the transfer device 1000 may execute a loop including the below-described steps.

Here, i=1, 2, 3,..max may indicate the number of repetitions of the loop.

Error calculation step

1) The transfer device 1000 may calculate an error in an i-th loop according to a difference between new transfer coil current td(j) and actual transfer coil current (ta(j, i-1) of an (i-1)-th loop, according to Equation 4.

Equation 4

$$t^{(j,i)} = t_d^{(j)} - t_a^{(j,i-1)}$$

where, ta(j, i-1) may denote transfer coil current determined by the (i-1)-th loop, and ta(j,0) may denote actual transfer coil current at a start point of a loop.

2) The first summer 14a sums the new transfer coil current td(j) and the actual transfer coil current ta(j, i-1) determined by the (i-1)-th loop from the second amplifier 13a to calculate an error, and outputs the calculated error to the PID controller 12.

(3) Control amount calculation step

1) The PID controller 12 of the transfer device 1000 may perform proportional control (P) for changing a control amount in proportion to the error, integral control (I) for integrating the error to perform control and derivative control (D) for determining a control amount through error change.

The PID controller 12 may calculate a proportional term, an integral term and a derivative term as shown in Equation 5. Specifically, the proportional controller 12a may calculate the proportional term P(j, i) based on the error, the integral controller 12b may calculate the integral term I(j, i) based on the accumulated error, and the derivative controller 12c may calculate the derivative term D(j, i) based on error change.

Equation 5

$$P^{(j,i)} = K_p \times e^{(j,i)}$$

$$I^{(j,i)} = I^{(j,i-1)} + K_i \times e^{(j,i)} \times t_{inner}$$

$$D^{(j,i)} = K_d \times \frac{e^{(j,i)} - e^{(j,i-1)}}{t_{inner}}$$

2) where, Kp denotes proportional gain, Ki denotes integral gain, and Kd denotes derivative gain. In addition, t_inner denotes a time required to repeat one loop. In addition, the integral term I(j,0)=0, and the error e(j,0)=0. The transfer device 1000 may restrict the integral term I(j,i) within a range of -M_I..+M_I, and the calculated integral term I(j, i) may be changed to an appropriate boundary value as necessary. Here, M_I is an integral term limit parameter.

3) The output signal of the integral controller 12b may be fed back to the input terminal of the integral controller 12b through the fourth amplifier 13d. At this time, the fed-back output signal is the integral term (I(j, i-10 of a preceding ((i-1)-th) loop. In addition, the input signal of the derivative controller 12c may be input to the derivative controller 12c through the third amplifier 13c. At this time, the input signal is the error (e(j, i-1) of the preceding ((i-1)-th) loop. The second summer 14b of the transfer device 1000 may sum the proportional term (j, i) output from the proportional controller 12a, the integral term I(j, i) output from the integral controller 12b and the derivative term D(j, i) output from the derivative controller 12c to calculate a present (i-th) control amount PID (j, i), as shown in Equation 6.

Equation 6

$$PID^{(j,i)} = P^{(j,i)} + I^{(j,i)} + D^{(j,i)}$$

5) The transfer device 1000 may output the present (i-th) control amount PID (j, i) according to the above calculation, the present (i-th) control amount PID (j, i) may be restricted within a range of -M_PID..+M_PID. Here, M_PID is a control amount limit parameter (PID output limit parameter).

(4) Step of calculating new controlled variable

1) The transfer device 1000 may calculate a new controlled variable based on Equation 7.

Equation 7

$$v^{(j,i)} = v^{(j,i-1)} - S_v \times PID^{(j,i)}$$

2) where, Sv may denote a scaling factor based on the controlled variable.
In addition, the controlled variable is v(i,0)=v(j-1, i_max), and v(0,0) may denote the actual value of the controlled variable at a start time of the power transfer phase. The controlled variable may be any one of an operating frequency, the duty cycle of the DC/AC converter 1200, or change in phase shift or input voltage of the DC/AC converter 1200. If the calculated v(j, i) exceeds a predetermined range, the transfer device 1000 may change the calculated v(j, i) to an appropriate limit value.

3) The second calculator 15 may calculate a new controlled variable v(j, i) according to Equation 7 above based on the input present (i-th) control amount PID (j, i) and the controlled variable of a preceding ((i-1)-th) loop fed back through the fifth amplifier 13e.

4) In addition, in order to appropriately restrict the current induced in the reception-side coil unit 210 in a current threshold value range, at least one of a scaling factor Sv or a new controlled variable v(j, i) may be adjusted.

Specifically, the scaling factor $S_v$ may be changed according to the driving frequency range as shown in Table 1, for example.

Table 1

| Frequency Range [kHz] | Scaling Factor $S_v$ [Hz] |
|---|---|
| 110...140 | 1.5 |
| 140...160 | 2 |
| 160...180 | 3 |
| 180...205 | 5 |

In addition, although the driving frequency of the transfer device 1000 has a range of 110 kHz to 205 kHz as shown in Table 1, if the driving frequency needs to be restricted to a value greater than 110 kHz and less than 205 kHz based on the threshold value of the current induced on the reception-side coil unit 2100 of the reception device 2000 received in the identification phase, a minimum scaling factor $S_v$ of the above-described scaling factors $S_v$ may be changed to a value greater than 1.5 and a maximum scaling factor $S_z$ may be changed to a value less than 5. The minimum and maximum values of the driving frequency may be changed to reconfigure the frequency range of the driving frequency. Such a scaling factor $S_v$ may be reconfigured before entering the power transfer phase as described with reference to FIG. 9 or after receiving the first control error packet as described with reference to FIG. 10.

In addition, as another example, when a controlled variable becomes an operating frequency, the power converter 101 may be driven at a driving frequency higher than 160 kHz in the half-bridge inverter driving state of the power converter 101 on the basis of 160 kHz of Table 1 and the new controlled variable v(j, i) may be changed such that the driving frequency does not exceed a maximum limit value (e.g., the fourth driving frequency f4 of FIG. 7). Similarly, the power converter 101 may be driven at a driving frequency lower than 160 kHz in the full-bridge inverter driving state of the power converter 101 and the new controlled variable v(j, i) may be changed such that the driving frequency does not exceed a minimum limit value (e.g., the fifth driving frequency f5 of FIG. 7).

(5) Step of controlling power converter based on new controlled variable

1) The transfer device 1000 may apply a controlled variable v(j, i) of a new value to the DC/AC converter 1200. The new controlled variable v(j, i) is configured such that the value of current induced in the reception-side coil unit 2100 does not exceed a current threshold value and the reception device 2000 is not damaged even in rapid change in coupling coefficient.
2) The transfer device 1000 may generate new power according to the transfer coil current ta(j, i) determined by the first calculator 11 based on the controlled variable v(j, i) of the new value.

(6) Meanwhile, referring to FIG. 12, the transfer device 1000 may determine the transfer coil current ta(j) during a time t_delay+t_active+t_settle after the reception end point of the j(th) control error packet.

Here, t_delay may mean a time delayed to perform power control according to the preceding control error packet after receiving the preceding control error packet, t_active may mean a time required to perform power control (in the example of the figure, to increase transmit power) according to the preceding control error packet, and t_settle may mean a settlement time of a target power value.

Meanwhile, the predetermined range used to determine whether the gains Ki, Ki and Kd of the PID controller 12, the integral term limit parameter M_I, the PID output limit parameter M_PID and V(j, i) exceed the predetermined range and the scaling factor Sv may be determined in consideration of the transmit power properties of the power transfer contract, the specifications of the transfer device 1000 and the standard and capacity of the transfer coil unit 1400 and the current threshold value of the reception device 2000.

The transfer device 1000 for receiving the control error packet may determine new transfer coil current and determine new transmit power based on the new transfer coil current. According to the amount of new transmission power, wireless power transfer may end without generating the new transmit power or the new transmit power may be generated to continue to transfer wireless power.

According to the embodiment, if the coupling coefficient is low due to misalignment between the transfer device 1000 and the reception device 2000, receive power of the reception device 2000 is less than power output from the transfer device 1000. Therefore, the reception device 2000 may require more power and the amount of transmit power of the transfer device 1000 may increase. At this time, wireless power is generated and transmitted in a driving frequency range reconfigured in the current threshold value of the reception device 2000, thereby solving a problem that the reception device 2000 is damaged by excessive transmit power and heating according to excessive transmit power.

In particular, as in the vehicle wireless charging system, if misalignment between the transfer device 1000 and the reception device 2000 instantaneously and repeatedly occurs due to rocking of the vehicle, the current induced on the reception-side coil unit 2100 does not exceed the threshold value even when the transfer power of the transfer device 1000 is instantaneously changed, thereby preventing the reception device 2000 from being damaged.

Although embodiments have been described with reference to a number of illustrative embodiments thereof, it should be understood that numerous other modifications and embodiments can be devised by those skilled in the art that will fall within the spirit and scope of the principles of this disclosure. Accordingly, the scope of the embodiments should be determined by the appended claims and their legal equivalents, not by the above description.

## Claims

1.  A method of wirelessly transferring power from a transfer device to a reception device, comprising:

    transmitting a signal for detecting the reception device;
    receiving an identification packet from the reception device;
    reconfiguring a range of a driving frequency of the transfer device based on the identification packet of the reception device; and
    transferring wireless power generated in the reconfigured range of the driving frequency.

2.  The method according to claim 1, wherein the reconfiguring of the range of the driving frequency comprises reconfiguring a minimum frequency and a maximum frequency of the driving frequency.

3.  The method according to claim 1, wherein the range of the driving frequency is reconfigured based on a current threshold value of a reception-side coil unit included in the identification packet.

4.  The method according to claim 1, wherein the range of the driving frequency is reconfigured based on the identification packet after receiving a control error packet from the reception device.

5.  The method according to claim 2, wherein the reconfigured minimum frequency of the driving frequency is greater than a minimum frequency of a predetermined driving frequency of the transfer device.

6.  The method according to claim 2, wherein the reconfigured maximum frequency of the driving frequency is less than a maximum frequency of a predetermined driving frequency of the transfer device.

7.  The method according to claim 1, further comprising:

    receiving a control error packet from the reception device; and
    generating wireless power based on information on a desired power amount of the reception device of the control error packet.

8.  The method according to claim 7, wherein the generating of the wireless power comprises:

    generating wireless power based on proportional integral differential (PID) control;
    configuring a present controlled variable based on a difference between a preceding controlled variable according to a preceding control error packet and a product between a present PID control amount according to a present control error packet and a scaling factor; and
    generating wireless power based on the present controlled variable.

9.  The method according to claim 8, wherein the scaling factor is changed based on the reconfigured range of the driving frequency.

**10.** A method of, at a reception device, wirelessly receiving power from a transfer device, comprising:

transmitting a response signal to a detection signal from the transfer device;
transmitting an identification packet to the transmission device; and
receiving wireless power generated according to a range of a driving frequency reconfigured based on the identification packet.

**11.** The method according to claim 10,
wherein the identification packet includes a current threshold value of the reception device, and
wherein the range of the driving frequency is reconfigured based on the current threshold value.

**12.** The method according to claim 7, wherein a minimum frequency and a maximum frequency of the driving frequency are reconfigured to reconfigure the range of the driving frequency.

**13.** The method according to claim 12, wherein the reconfigured minimum frequency of the driving frequency is greater than a minimum frequency of a predetermined driving frequency of the transfer device.

**14.** The method according to claim 12, wherein the reconfigured maximum frequency of the driving frequency is less than a maximum frequency of a predetermined driving frequency of the transfer device.

**15.** A transfer device comprising:

a transfer coil for transferring wireless power;
a power converter for outputting power to the transfer coil; and
a controller for controlling the power converter in order to control an amount of power output to the transfer coil,
wherein the controller reconfigures a range of a driving frequency of the power converter based on an identification packet of a reception device for receiving the wireless power.

**16.** The transfer device according to claim 15,
wherein the identification packet includes a current threshold value of the reception device, and
wherein the range of the driving frequency is reconfigured based on the current threshold value.

**17.** The transfer device according to claim 16, wherein the power converter operates as any one of a half-bridge inverter or a full-bridge inverter based on the identification packet.

**18.** The transfer device according to claim 15, wherein the controller controls the amount of wireless power by adjusting any one of a driving frequency of the power converter, an input voltage, a duty cycle and phase shift.

**19.** The transfer device according to claim 15,
wherein the controller comprises:

a first calculator for determining second current based on a power increasing request signal from the reception device and first current of the transfer coil;
a proportional integral differential (PID) controller for determining a control amount based on PID control; and
a second calculator for determining a present controlled variable based on the control amount and a preceding controlled variable,
wherein the power converter is controlled based on the present controlled variable, and
wherein the second calculator determines the present controlled variable based on a difference between a product of the control amount and a scaling factor and the preceding controlled variable.

**20.** The transfer device according to claim 19, the scaling factor is changed based on the reconfigured range of the driving frequency.

Fig 1

Fig2

Fig 3a

<u>1000</u>

Fig 3b

1000

Fig 3c

101,1200

Q1  Q2

Input
Voltage

102

Q3  Q4

Fig 4a

1000   201   202   2500

2510

2520

203

Fig 4b

Fig 5

Fig 6

Fig 7

Fig 8

Fig 9

```
┌─────────────────────────┐
│     SELECTION PHASE      │
└─────────────────────────┘
             │
             ▼
┌─────────────────────────┐
│       PING PHASE         │
└─────────────────────────┘
             │
             ▼
┌─────────────────────────┐
│    IDENTIFICATION AND    │──────────────────┐
│   CONFIGURATION PHASE    │                  │
└─────────────────────────┘                  │
                                             ▼
                              ┌──────────────────────────────┐
                              │     RECEIVE IDENTIFICATION     │
                              │   PACKET (THRESHOLD CURRENT    │
                              │      VALUE INFORMATION)        │
                              └──────────────────────────────┘
                                             │
                                             ▼
                              ┌──────────────────────────────┐
                              │  DRIVING FREQUENCY BOUNDARY    │
                              │     CONFIGURATION PHASE        │
                              └──────────────────────────────┘
                                             │
┌─────────────────────────┐                  │
│   POWER TRANSFER PHASE   │◄─────────────────┘
└─────────────────────────┘
```

Fig 10

```
┌─────────────────────┐
│   SELECTION PHASE   │
└─────────────────────┘
           │
           ▼
┌─────────────────────┐
│     PING PHASE      │
└─────────────────────┘
           │
           ▼
┌─────────────────────┐                    ┌──────────────────────────┐
│  IDENTIFICATION AND │                    │RECEIVE IDENTIFICATION PACKET│
│ CONFIGURATION PHASE │───────────────────▶│ (THRESHOLD CURRENT VALUE  │
└─────────────────────┘                    │      INFORMATION)         │
                                           └──────────────────────────┘
┌─────────────────────┐                                 │
│ POWER TRANSFER PHASE │◀───────────────────────────────┘
└─────────────────────┘
           │
           ▼
┌─────────────────────┐
│ RECEIVE FIRST CONTROL│
│    ERROR PACKET     │
└─────────────────────┘
           │
           ▼
┌──────────────────────┐
│DRIVING FREQUENCY BOUNDARY│      REFERENCE
│ CONFIGURATION PHASE  │- - - - - - - - - - - - - -
└──────────────────────┘
```

Fig 11

1000

Control Error Message

$t_a^{(j-1)}$
$t_a^{(j)}$

11   $t_a^{(j)}$

12a   $P^{(j,i)}$   12

12b

14b

15

14a   $\Sigma$   $e^{(j,i)}$

$V^{(j,i)}$

101

13b   $t_a^{(j,i-1)}$

$I^{(j,i-1)}$

$v^{(j,i-1)}$

13d

13e

$D^{(j,i)}$

12c

$t_a^{(j,i)}$

$t_a^{(j-1)}$

$e^{(j,i-1)}$

13a   13c

Fig 12

$t_{timeout}$

$t_{delay}$   $t_{active}$   $t_{settle}$

Preceding Control Error   Next Control Error

## EP 3 364 521 A1

<table>
<tr><td colspan="2" align="center"><strong>INTERNATIONAL SEARCH REPORT</strong></td><td>International application No.<br><strong>PCT/KR2016/011498</strong></td></tr>
</table>

| A. | CLASSIFICATION OF SUBJECT MATTER |
|---|---|

*H02J 50/80(2016.01)i, H02J 50/90(2016.01)i, H02J 50/12(2016.01)i, H02J 7/02(2006.01)i, H02M 7/48(2007.01)i*

According to International Patent Classification (IPC) or to both national classification and IPC

| B. | FIELDS SEARCHED |
|---|---|

Minimum documentation searched (classification system followed by classification symbols)

H02J 50/80; B60L 11/18; H02J 17/00; H02M 3/28; H02M 7/48; H02J 50/90; H02J 50/12; H02J 7/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: wireless power, transmission, reception, detection, signal, identification packet, driving frequency, re-configuration, PID control

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2013-0005570 A (LG ELECTRONICS INC.) 16 January 2013<br>See abstract, paragraphs [56]-[57], [92]-[109], [246], [260]-[281] and figures 1-19. | 1-20 |
| Y | JP 2015-173587 A (PANASONIC CORP.) 01 October 2015<br>See abstract, paragraphs [17]-[29] and figures 3-4. | 1-20 |
| Y | JP 2015-502131 A (TEXAS INSTRUMENTS JAPAN LTD. et al.) 19 January 2015<br>See abstract, paragraphs [15]-[22] and figures 1-2. | 8-9,19-20 |
| Y | KR 10-2015-0088678 A (LG INNOTEK CO., LTD.) 03 August 2015<br>See paragraphs [43]-[79], claims 1-11 and figures 2-4. | 17 |
| A | KR 10-2014-0013050 A (KABUSHIKI KAISHA HITACHI SEISAKUSHO(D/B/A HITACHI, LTD.)) 04 February 2014<br>See abstract, claims 1-20 and figures 1-7. | 1-20 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 JANUARY 2017 (26.01.2017) | **31 JANUARY 2017 (31.01.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/011498**

| Patent document cited in search report | Publication date | Patent family member | Publication date |
|---|---|---|---|
| KR 10-2013-0005570 A | 16/01/2013 | NONE | |
| JP 2015-173587 A | 01/10/2015 | CN 104852474 A | 19/08/2015 |
| | | EP 2908405 A1 | 19/08/2015 |
| | | US 2015-0236518 A1 | 20/08/2015 |
| JP 2015-502131 A | 19/01/2015 | CN 104011969 A | 27/08/2014 |
| | | US 2013-0147280 A1 | 13/06/2013 |
| | | US 9087638 B2 | 21/07/2015 |
| | | WO 2013-090565 A1 | 20/06/2013 |
| KR 10-2015-0088678 A | 03/08/2015 | EP 3096437 A1 | 23/11/2016 |
| | | KR 10-2015-0082860 A | 16/07/2015 |
| | | US 2016-0329752 A1 | 10/11/2016 |
| | | WO 2015-105334 A1 | 16/07/2015 |
| KR 10-2014-0013050 A | 04/02/2014 | CN 103548231 A | 29/01/2014 |
| | | EP 2717414 A1 | 09/04/2014 |
| | | EP 2717414 A4 | 14/10/2015 |
| | | JP 2011-248129 A | 08/12/2011 |
| | | JP 5627292 B2 | 19/11/2014 |
| | | JP 5801884 B2 | 28/10/2015 |
| | | KR 10-1577517 B1 | 14/12/2015 |
| | | US 2011-0293333 A1 | 01/12/2011 |
| | | US 2014-0084862 A1 | 27/03/2014 |
| | | US 9008554 B2 | 14/04/2015 |
| | | US 9231424 B2 | 05/01/2016 |
| | | WO 2012-160660 A1 | 29/11/2012 |

Form PCT/ISA/210 (patent family annex) (January 2015)